(19) Europäisches Patentamt

European Patent Office

Office européen des brevets

(11) EP 0 865 679 B1

(12) FASCICULE DE BREVET EUROPEEN

(45) Date de publication et mention
de la délivrance du brevet:
**02.02.2000 Bulletin 2000/05**

(51) Int Cl.7: **H02K 21/02**, H02K 11/00

(86) Numéro de dépôt international:
**PCT/FR96/01832**

(21) Numéro de dépôt: **96939152.3**

(22) Date de dépôt: **19.11.1996**

(87) Numéro de publication internationale:
**WO 97/19508 (29.05.1997 Gazette 1997/23)**

(54) **PROCEDE ET DISPOSITIF DE COMPENSATION DES FORCES D'ATTRACTION MAGNETIQUE A L'INTERIEUR D'UNE MACHINE DISCOIDE**

VORRICHTUNG UND VERFAHREN ZUR KORREKTUR DER MAGNETISCHEN ANZIEHUNG IN EINER SCHEIBENFÖRMIGEN MASCHINE

METHOD AND DEVICE FOR COMPENSATING FOR MAGNETIC PULL IN A DISCOIDAL MACHINE

(84) Etats contractants désignés:
**CH DE ES FR GB IT LI SE**

(30) Priorité: **20.11.1995 FR 9513739**

(43) Date de publication de la demande:
**23.09.1998 Bulletin 1998/39**

(73) Titulaire: **JEUMONT INDUSTRIE**
**92400 Courbevoie (FR)**

(72) Inventeurs:
• **DE SIMON, Eddy**
**F-59460 Jeumont (FR)**

• **MILET, Yves**
**F-59600 Assevent (FR)**
• **BONDU, Alain**
**F-59460 Jeumont (FR)**

(74) Mandataire: **Corret, Hélène et al**
**Cabinet Weinstein,**
**56 A, rue du Faubourg Saint-Honoré**
**75008 Paris (FR)**

(56) Documents cités:
**DE-A- 2 802 753       DE-A- 3 435 628**
**FR-A- 2 583 231**

## Description

La présente invention se situe dans le domaine des machines électriques à structure discoïde. Elle concerne plus particulièrement un procédé et un dispositif de compensation des forces d'attraction magnétique entre le rotor et le stator d'une telle machine.

Les machines électriques de structure discoïde comprennent au moins un stator en forme de disque maintenu sur une carcasse et dont la partie centrale est généralement évidée, ainsi qu'un rotor également en forme de disque, monté sur un arbre dont l'axe coïncide avec celui du disque stator.

On peut notamment citer le brevet FR-2 583 231 qui décrit une machine discoïde dans laquelle un disque rotor est placé entre deux disques stator, les bobinages des disques rotor et stator étant placés sur des faces en regard.

On peut également envisager une machine discoïde comprenant un disque stator à double face, placé entre les deux disques du rotor.

Dans les deux cas, les faces du stator et du rotor sont séparées par des entrefers. Au moment du montage, les dimensions de ces entrefers sont prévues approximativement égales. Dans ce type de machine, le rotor peut présenter des décalages axiaux par rapport au stator, en raison des tolérances mécaniques d'usinage et de montage des différents éléments. On constate également que les dimensions peuvent varier, du fait des dilatations thermiques des matériaux et des efforts mécaniques.

Le flux qui traverse les pôles de la machine discoïde comprend deux composants: le flux principal et le flux secondaire, appelé également flux interpolaire.

Le flux principal traverse axialement chaque disque. Les forces engendrées sont donc de sens opposé et la résultante de ces forces est théoriquement nulle.

Le flux interpolaire comprend des composantes variables en fonction du nombre de pôles et des dimensions de l'entrefer. Il engendre des forces qui, en théorie, s'annulent.

Cependant, du fait des variations dimensionnelles apparaissant à l'intérieur de la machine discoïde, les forces engendrées par les flux interpolaires au niveau de chaque entrefer ne s'annulent pas en pratique.

Ainsi, pendant le fonctionnement de la machine, des efforts axiaux importants apparaissent sur le rotor et le stator, ces efforts étant dus aux différences de flux interpolaires sur chaque face du rotor ou du stator.

Ces efforts peuvent entraîner la détérioration de la machine discoïde.

L'invention a pour objet de pallier ces inconvénients en proposant un procédé de compensation des forces d'attraction magnétique à l'intérieur d'une machine électrique à structure discoïde comportant au moins trois disques rotor et stator disposés coaxialement et formant deux entrefers, les disques extérieurs étant d'un type différent de celui du disque intérieur.

Le procédé consiste à:

- mesurer pour chacun des deux entrefers une même grandeur représentative de la valeur de l'entrefer,
- comparer lesdites grandeurs et
- modifier les flux au niveau des entrefers pour équilibrer la valeur des deux entrefers et ainsi, compenser les forces d'attraction magnétique.

Dans un premier mode de mise en oeuvre, les flux des entrefers sont modifiés en alimentant, de façon indépendante, les faces statoriques.

De façon préférée, l'alimentation des faces statoriques est réalisée par l'intermédiaire de convertisseurs, associés chacun à une face de disque stator.

Dans un deuxième mode de mise en oeuvre, les flux des entrefers sont modifiés en générant un flux additionnel au niveau de chaque entrefer.

De façon préférée, ledit flux additionnel est généré par des courants circulant dans au moins un inducteur.

Selon une première variante de mise en oeuvre du procédé, ladite grandeur représentative de la valeur de l'entrefer est une grandeur électromagnétique, notamment le flux polaire, le flux interpolaire ou l'induction.

Selon une deuxième variante de mise en oeuvre du procédé, ladite grandeur est une grandeur mécanique, notamment la déformation mécanique des disques ou le déplacement relatif entre un disque rotor et un disque stator.

L'invention concerne également un dispositif de compensation des forces d'attraction magnétique à l'intérieur d'une machine électrique à structure discoïde comportant au moins trois disques rotor et stator disposés coaxialement et formant deux entrefers, les disques extérieurs étant d'un type différent de celui du disque intérieur, caractérisé en ce qu'il comprend :

- pour chaque entrefer, un moyen pour la mesure d'une grandeur représentative de la valeur dudit entrefer, disposé sur une des faces d'un des disques formant ledit entrefer, ladite grandeur étant identique pour les deux moyens de mesure, et
- une unité de commande dont les entrées sont reliées auxdits moyens de mesure et dont les sorties sont reliées à des moyens d'équilibrage, les signaux de sortie de l'unité de commande pilotant lesdits moyens d'équilibrage de façon à équilibrer les flux entre les deux entrefers et ainsi compenser lesdites forces d'attraction.

Dans une première variante de réalisation, les moyens d'équilibrage sont constitués par des convertisseurs associés chacun à une face de disque stator.

Dans une deuxième variante de réalisation, les moyens d'équilibrage sont constitués par au moins un inducteur pour chaque entrefer, disposé sur une face d'un des disques formant ledit entrefer.

Les caractéristiques suivantes peuvent également être prises en considération isolément ou selon toutes leurs combinaisons techniquement possibles :

- certains inducteurs sont les bobinages du ou des disques rotor.
- l'unité de commande comprend :

  - un module de régulation, recevant en entrée les signaux issus des moyens de mesure et
  - un module de pilotage, connecté à un dispositif d'alimentation en courant et auxdits inducteurs, le module de régulation délivrant un signal au module de pilotage pour dériver le courant issu du dispositif d'alimentation dans lesdits inducteurs,

- le module de régulation comprend :

  - des moyens pour transformer les signaux issus des moyens de mesure en des signaux continus et,
  - des moyens comparateurs desdits signaux continus, reliés à un dispositif de régulation intégrale,

- chaque moyen de mesure est constitué par au moins une spire,
- chaque moyen de mesure est constitué par au moins un capteur à effet Hall,
- chaque moyen de mesure est constitué par au moins un capteur à déplacement à courant de Foucault,
- chaque moyen de mesure est constitué par au moins une jauge de contrainte,
- le dispositif de compensation comprend un système de sécurité générant une alarme ou l'arrêt d'urgence de la machine lorsque la sortie des moyens comparateurs est supérieure à une valeur seuil déterminée.

L'invention sera mieux comprise et d'autres buts et avantages de celle-ci apparaîtront plus clairement à la lecture de la description qui suit, faite en regard des dessins annexés, représentant des exemples non limitatifs de réalisation de l'invention et sur lesquels:

- la figure 1 représente une demi-coupe schématique d'un exemple d'ensemble rotor/stator d'une machine discoïde,
- la figure 2 est une vue schématique partielle en développé de l'ensemble de la figure 1,
- la figure 3 illustre schématiquement un exemple de dispositif de compensation selon l'invention,
- la figure 4 illustre un autre exemple de dispositif de compensation selon l'invention,

- la figure 5 illustre un exemple de répartition sur une face d'un disque, de capteurs de mesure du flux interpolaire,
- la figure 6 montre un exemple de raccordement de spires de mesure du flux interpolaire,
- les figures 7 à 10 illustrent quatre modes de réalisation d'un dispositif de compensation selon l'invention.

Les éléments communs aux différentes figures seront désignés par les mêmes références.

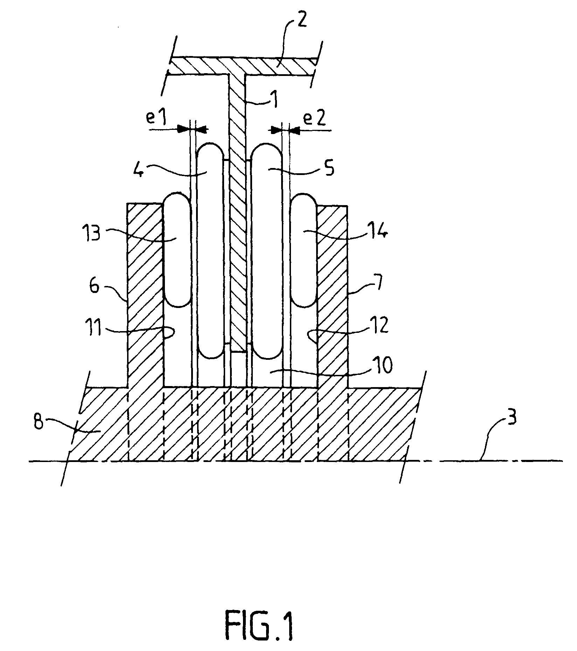

La figure 1 représente schématiquement une demi-coupe partielle d'un exemple de machine électrique à structure discoïde.

Cette machine comprend un disque stator 1 maintenu, par des moyens mécaniques classiques, sur une carcasse enveloppe 2, partiellement représentée.

Ce disque présente une partie centrale 10 qui est évidée et il est centré sur l'axe 3 de la machine. Le disque stator 1 porte, sur chacune de ses faces externes, des bobinages 4,5 formant des pôles magnétiques.

Le rotor comporte deux disques 6 et 7, solidaires de l'arbre 8 qui traverse la partie centrale évidée 10 du stator. L'axe de l'arbre 8 coïncide avec l'axe 3 de la machine.

Chaque disque rotor 6, 7 comporte, sur sa face 11, 12 en regard du disque stator 1, des bobinages 13, 14 formant une alternance de pôles Nord et de pôles Sud.

Entre la face interne des disques rotor 6, 7 et les faces externes du disque stator 1, il subsiste un entrefer e1, e2. Ces entrefers sont théoriquement de même valeur de part et d'autre du disque stator 1. Cependant, en raison des écarts de tolérance de fabrication et de montage, la valeur des entrefers est en pratique différente.

Pendant le fonctionnement de la machine, celle-ci s'échauffe. Le refroidissement n'étant pas parfaitement homogène dans l'ensemble de la machine, cet échauffement se traduit par des variations de dimensions. Ces variations dépendent de la température de fonctionnement et s'ajoutent aux écarts de tolérance sur la dimension des entrefers.

Des constatations similaires peuvent s'appliquer à une machine discoïde comprenant un disque rotor central et un stator constitués de deux disques, comme illustrée dans le brevet FR-2 583 231.

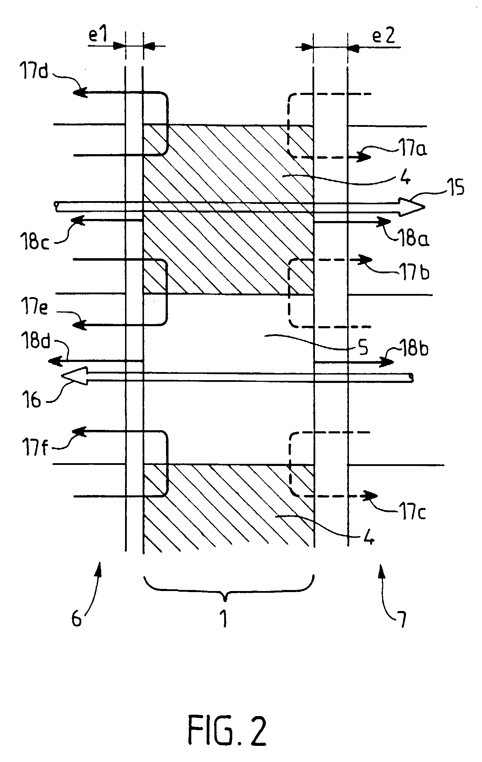

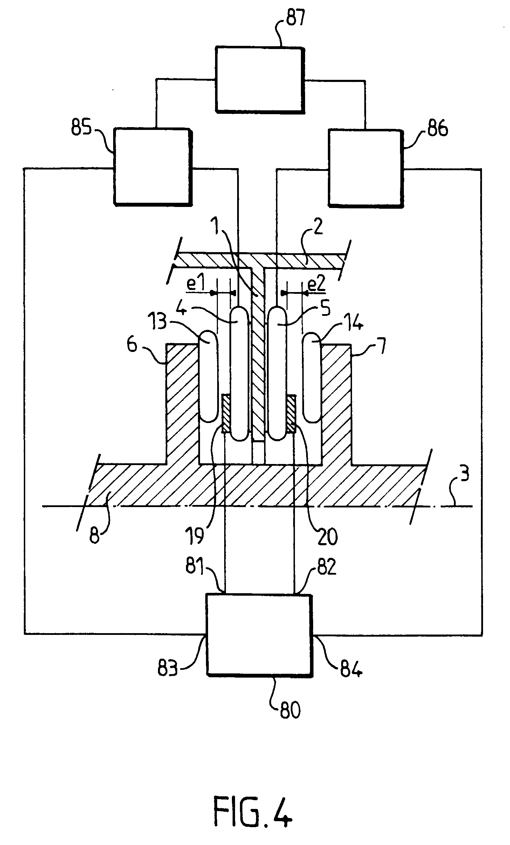

La vue partielle en développé selon la figure 2 montre l'ensemble rotors/stator de la figure 1. Cet ensemble comprend les disques rotor 6, 7 et le disque stator 1, équipé de pôles magnétiques 4, 5, de polarité inverse.

Les flèches 15 et 16 représentent le flux principal qui traverse les pôles 4, 5. Le sens du flux principal est inverse d'un pôle à l'autre, selon la polarité de celui-ci.

Les forces d'attraction engendrées en regard de chaque pôle par le flux principal sont également de sens opposé et pratiquement égales. En conséquence, la résultante de ces forces sur l'ensemble des disques rotors/stator est pratiquement nulle.

Les flèches 17a, 17b, 17c, 17d, 17e, 17f représentent le flux interpolaire qui circule d'un pôle à l'autre. Les flèches 18a, 18b, 18c, 18d désignent les forces d'attraction exercées sur les disques, par les différents flux interpolaires.

Si ces flux interpolaires étaient tous de même valeur, la résultante des forces exercées par ceux-ci, serait pratiquement nulle.

Cependant, comme expliqué précédemment, les deux entrefers e1 et e2 sont de dimension différente. De plus, en cours de fonctionnement de la machine, des variations de dimensions apparaissent, ces variations étant dues aux dilatations thermiques et aux déformations mécaniques. En conséquence, la résultante des forces exercées par les flux interpolaires n'est pas nulle, en pratique.

Ainsi, il subsiste une force d'attraction entre une face du disque stator 1 et l'un des disques rotor 6, 7. La face du disque rotor soumise à cette force d'attraction correspond à celle pour laquelle l'entrefer avec le disque stator est le plus faible.

En première approximation, on peut considérer que la force exercée sur chaque face des disques est égale à:

$$F = \beta^2 S/(2\mu_0)$$

avec:

F = force sur chaque face du disque
$\beta$ = induction dans l'entrefer
S = surface
$\mu_0$ = perméabilité dans l'entrefer

Si les entrefers ne sont pas de valeur égale, on peut estimer que la force d'attraction résultante qui s'exerce sur la face du disque rotor pour laquelle l'entrefer avec le disque stator est le plus faible, el dans l'exemple représenté à la figure 1, peut s'exprimer sous la forme:

$$\beta \times \Delta\beta \times S/(2\mu_0)$$

A titre d'exemple, un effort d'environ 8 tonnes par mètre carré est alors exercé sur le disque rotor, pour les valeurs suivantes: $\beta$ = 1 Tesla et $\Delta\beta$ = 0,1 Tesla.

Cette force d'attraction résultante a pour effet de réduire la valeur de l'entrefer e1 en regard d'une des faces du disque stator 1, cette valeur étant déjà la plus faible, et d'augmenter la valeur de l'entrefer e2, en regard de la face opposée du disque stator, cette valeur étant au départ la plus importante.

Par ailleurs, les variations de la valeur des entrefers el et e2 modifient également la valeur des flux interpolaires et donc des forces correspondantes. Ces forces augmentent sur la face du disque rotor correspondant à l'entrefer e1 qui diminue et elles diminuent sur la face opposée.

Ainsi, l'écart entre les forces d'attraction augmente, ce qui tend à réduire encore plus la valeur de l'entrefer e1, au départ la plus faible, et à augmenter la valeur de l'entrefer e2, en regard de la face opposée du disque stator.

L'augmentation de ces forces d'attraction d'un côté du disque stator (du côté de l'entrefer e1) et la diminution de ces forces, du côté opposé, entraînent des efforts importants et une déformation des disques stator et rotor. A l'extrême, un disque rotor peut venir frotter sur le disque stator, ce qui entraîne la détérioration des bobinages et la destruction de la machine.

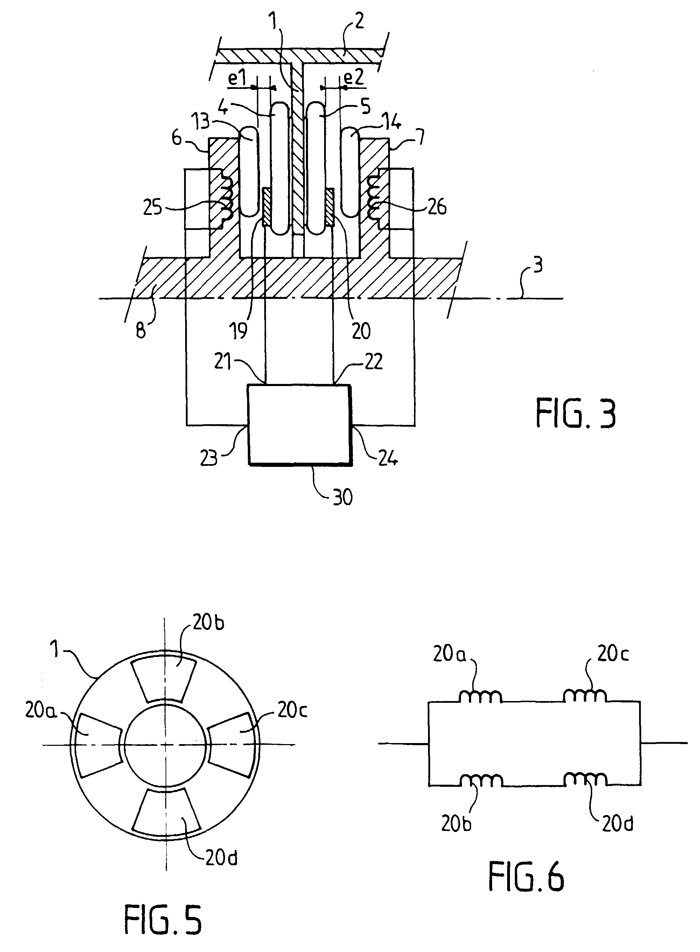

On se réfère maintenant à la figure 3 qui illustre le procédé selon l'invention, permettant la compensation des efforts d'attraction magnétique entre le rotor et le stator d'une machine électrique à structure discoïde, le rotor et le stator formant deux entrefers.

Comme sur la figure 1, la machine discoïde comporte un disque stator 1 et deux disques rotor 6, 7, l'ensemble des disques étant centré sur l'axe de rotation 3.

Des moyens 19, 20 sont placés sur chaque face du disque stator 1, pour mesurer une grandeur représentative de chaque entrefer e1, e2, par exemple du type électromagnétique (notamment le flux traversant chaque ensemble de disques rotor/stator, le flux interpolaire ou l'induction) ou du type mécanique (notamment le déplacement entre un disque rotor et le disque stator ou une déformation mécanique).

Dans l'exemple représenté à la figure 1, les moyens 19, 20 permettent de mesurer le flux traversant chaque ensemble de disques rotor/stator, correspondant à une partie du flux polaire, constitué du flux principal et du flux interpolaire.

Ces moyens de mesure sont, par exemple, des spires disposées sur chaque face du disque stator 1. On peut noter que les moyens de mesure ne sont pas nécessairement sur le disque central.

La solution la plus simple techniquement est de disposer les moyens de mesure sur le stator de la machine, c'est-à-dire, selon le type de machine discoïde retenu, sur le disque central ou sur les disques d'extrémité. Cependant, il est également possible de placer les moyens de mesure sur le ou les disques rotor.

Comme indiqué précédemment, les flux mesurés par les moyens 19, 20 créent des forces d'attraction, dont la résultante est généralement non nulle, compte tenu notamment des dimensions différentes des entrefers.

Le signal généré par chaque moyen de mesure 19, 20 est appliqué aux deux entrées 21, 22 d'une unité de commande 30. L'unité de commande peut déterminer un signal d'erreur qui est notamment fonction des dimensions des entrefers.

Les deux sorties 23, 24 de l'unité de commande sont reliées à des inducteurs 25, 26, montés sur la face de chaque disque rotor, en regard du disque stator 1. Les inducteurs 25, 26 correspondent respectivement aux bobinages 13, 14 de chaque disque rotor 6, 7. Ils peuvent également prendre la forme d'inducteurs additionnels.

L'unité de commande 30 délivre, au niveau de ses sorties 23, 24, des signaux sous la forme d'un courant, ces signaux créant un champ induit et donc un flux additionnel. L'unité de commande 30 détermine la valeur de ces signaux pour accroître le flux interpolaire le plus faible et réduire le flux interpolaire le plus fort.

Ainsi, les inducteurs 25, 26 engendrent une force égale et de sens opposé à la résultante des forces d'attraction et constituent des moyens d'équilibrage des forces d'attraction magnétique. Les efforts axiaux qui s'exercent sur les disques rotor et stator sont ainsi annulés, même si la valeur des deux entrefers el et e2 est différente par construction.

En référence à la figure 4, une variante du procédé selon l'invention va maintenant être décrite.

Cette variante du procédé de compensation convient à une machine pilotée par des convertisseurs, un convertisseur étant prévu pour chaque face du disque stator.

Comme sur la figure 3, des moyens de mesure 19, 20 sont prévus sur chaque face du disque stator. Le signal généré par chaque moyen de mesure 19, 20 est appliqué aux deux entrées 81, 82 d'une unité de commande 80.

Les deux sorties 83, 84 de l'unité de commande sont reliées aux convertisseurs 85, 86. Chacun de ces convertisseurs est associé à une face du disque stator 1.

Les convertisseurs 85, 86 sont connectés à au moins une unité d'alimentation électrique 87. Ils peuvent alimenter les faces du disque stator seuls, ou en association avec d'autres sources.

L'unité de commande 80 délivre, au niveau de ses sorties 83, 84 des signaux différents qui agissent indépendamment sur les convertisseurs 85, 86 alimentant chaque face du stator 1, étant entendu que d'autres paramètres, mécaniques, électriques ou encore électroniques peuvent également intervenir dans la commande des convertisseurs.

Ces signaux peuvent agir notamment sur la tension d'alimentation, le courant d'alimentation, l'angle interne ou la forme d'onde.

L'unité de commande 80 détermine la valeur de ces signaux pour accroître le flux interpolaire le plus faible et réduire le flux interpolaire le plus fort. Dans cette variante, les convertisseurs constituent les moyens d'équilibrage des forces d'attraction magnétique.

Cette variante du procédé de compensation est particulièrement bien adaptée aux machines à aimants permanents, pour lesquelles la compensation des forces d'attraction au moyen d'un flux additionnel est difficile.

Elle convient également à des machines asynchrones discoïdes.

Comme indiqué précédemment, d'autres grandeurs représentatives des entrefers e1, e2 pourraient être mesurées, par exemple :

- le flux interpolaire, notamment en disposant une spire de mesure sur la paroi latérale d'une encoche statorique,
- le flux polaire sur un ou plusieurs pôles ou parties de pôle (à condition que la résultante du flux mesuré ne soit pas nulle à chaque instant, ce qui serait par exemple le cas si la mesure était effectuée sur une face complète du disque),
- l'induction, notamment au moyen d'un capteur à effet Hall,
- le déplacement relatif entre un disque rotor et le disque stator, notamment au moyen d'un capteur de déplacement à courant de Foucault ou,
- la déformation mécanique des disques, par exemple avec des jauges de contrainte.

La figure 5 illustre un exemple de répartition des spires de mesure sur une face du disque stator 1, l'ensemble des spires formant un moyen de mesure.

Quatre spires 20a, 20b, 20c, 20d sont réparties suivant des diamètres orthogonaux sur le disque stator 1. En fonction de la valeur du diamètre du disque stator, la quantité de spires peut varier, le nombre total pouvant être pair ou impair.

La figure 6 représente un exemple de schéma de raccordement des spires illustrées à la figure 5. Ainsi, deux spires 20a, 20c; 20b, 20d situées sur le même diamètre du disque stator 1, à des extrémités opposées, sont raccordées en série. Les groupes de deux spires sont, quant à eux, raccordés en parallèle.

La figure 6 montre un schéma de raccordement pour deux couples de spires. Ce schéma peut être étendu à plus de deux paires de spires. Dans ce cas, tous les groupes de deux spires sont également raccordés en parallèle.

On peut aussi envisager de raccorder les spires en série, l'essentiel étant d'obtenir un signal électrique ou électronique résultant qui est compatible avec les unités de commande 30 ou 80.

Les spires de mesure peuvent être disposées différemment de l'exemple illustré à la figure 5, où elles ont été réparties sur toute la face du disque stator 1. Cependant, un nombre différent de capteurs, répartis de façon homogène ou non, aurait pu être prévu.

De façon générale, le nombre et la répartition des capteurs doivent être choisis pour donner un signal représentatif du flux dans chaque entrefer, pour que l'unité de commande puisse efficacement réguler les flux interpolaires.

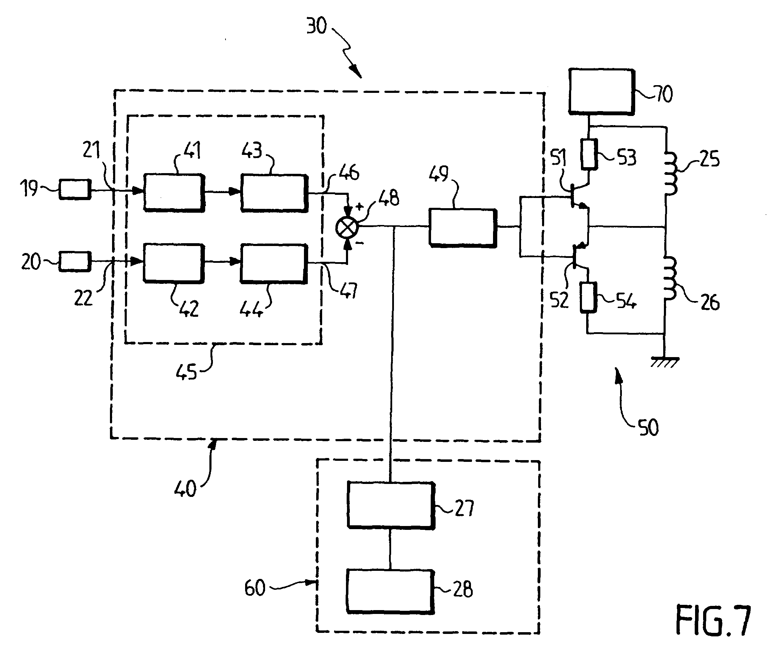

La figure 7 illustre un premier mode de réalisation de l'unité de commande 30 des inducteurs 25, 26.

De façon générale, l'unité de commande 30 comprend un module de régulation 40 et un module de pilotage 50.

Les entrées 21, 22 du module de régulation 40 coïncident avec les entrées de l'unité de commande 30. Ces entrées 21, 22 reçoivent les signaux émis par les moyens de mesure 19, 20, disposés dans l'exemple illustré à la figure 3 sur chaque face du disque stator 1.

Le module de régulation 40 comporte un dispositif 45 qui transforme les signaux transmis aux entrées 21, 22 en des signaux continus, délivrés au niveau des sorties 46 et 47 du dispositif 45.

Ainsi, lorsque les moyens de mesure 19, 20 délivrent une tension ondulée, celle-ci est redressée par des éléments 41, 42 puis filtrée par les éléments 43, 44.

Les signaux délivrés par le dispositif 45 sont appliqués aux deux entrées de moyens comparateurs 48. Ceux-ci délivrent un signal d'écart qui est appliqué d'une part, à un dispositif de régulation intégral 49 et d'autre part, à un système de sécurité 60.

De façon générale, la conception du module de régulation 40 dépend des moyens de mesure et du choix technologique qui est retenu. De nombreuses variantes peuvent ainsi être envisagées.

Le mode de réalisation décrit plus haut convient à des moyens de mesure réalisés sous forme de spires pour la mesure du flux. Pour ce même type de capteurs, le module de régulation 40 peut également être conçu pour comparer directement les signaux alternatifs issus des spires avec une référence de phase. Dans ce cas, les éléments redresseurs 41 et 42 sont supprimés et les éléments de filtrage 43 ou 44 sont supprimés ou adaptés pour ne conserver par exemple que l'onde fondamentale du signal.

Dans le cas où les moyens de mesure sont des capteurs à effet Hall, placés sur le ou les disques rotor pour la mesure de l'induction, les signaux délivrés sont principalement continus. Le module de régulation 40 peut alors être conçu pour comparer les signaux après un filtrage des hautes fréquences.

Le système de sécurité 60 comporte un détecteur de défaut 27 et un module 28, situé dans un poste de contrôle de la machine.

Le détecteur de défaut 27 délivre un signal si la valeur du signal d'écart délivré par le comparateur 48, correspondant à l'écart des flux mesurés, excède une valeur seuil déterminée. Ce signal, du type tout ou rien, est appliqué au module 28. Ce module permet de générer une alarme ou un arrêt d'urgence de la machine, pour éviter sa destruction.

Le dispositif de régulation intégrale 49 a pour fonction d'adapter le signal issu des moyens comparateurs 48 à la commande du module de pilotage 50. Le signal de sortie du dispositif 49 est donc transmis au module de pilotage 50.

De façon générale, ce module de pilotage est un dispositif d'asservissement de la position relative des disques rotor et stator au moyen d'une grandeur représentative du décentrement des disques ou encore de l'écart entre les entrefers apparaissant sur une machine discoïde.

Dans l'exemple illustré à la figure 7, ce module 50 est relié à un dispositif d'alimentation 70 et comporte deux transistors de puissance 51, 52. Ceux-ci sont pilotés par le signal délivré par le dispositif de régulation 49. Les transistors 51, 52 sont reliés aux inducteurs 25, 26, disposés sur chaque disque rotor 6, 7, par l'intermédiaire de résistances 53, 54.

Ainsi, les transistors 51, 52 dérivent partiellement le courant continu, issu du dispositif d'alimentation 70, dans les résistances 53, 54. Et le courant dans les inducteurs 25, 26 varie à l'inverse des courants dans les résistances 53, 54.

Pour illustrer le fonctionnement de l'unité de commande 30, on suppose que la valeur du flux mesurée par les moyens de mesure 19 est supérieure à celle mesurée par les moyens de mesure 20.

Dans cette hypothèse, le disque rotor 6 est soumis à une force d'attraction, tendant à réduire l'entrefer e1.

Le signal issu des moyens comparateurs 48 est positif. Le dispositif de régulation intégrale délivre également un signal positif qui est transmis au module de pilotage 50 et appliqué sur les bases des transistors 51 et 52. Ce signal assure la conduction du transistor 51 et bloque le transistor 52.

Le courant circulant dans l'inducteur 26 sera supérieur à celui circulant dans l'inducteur 25 et sa valeur est telle qu'elle génère un flux compensant la force d'attraction à laquelle le disque rotor 6 est soumis.

De même, lorsque le signal issu des moyens comparateurs 48 est négatif, le dispositif de régulation 40 délivre un signal négatif appliqué sur la base des transistors. De ce fait, le transistor 51 est bloqué alors que le transistor 52 est conducteur.

Lorsque le signal issu des moyens est sensiblement nul, les transistors 51 et 52 sont tous les deux bloqués.

De préférence, le dispositif de régulation 49 intègre un décalage de zéro permettant d'obtenir l'équilibre en sortie pour un signal non nul en entrée. Ainsi, l'unité de commande ne régule pas les flux lorsque l'écart entre les signaux délivrés par les moyens de mesure 19, 20 est inférieur à une valeur déterminée.

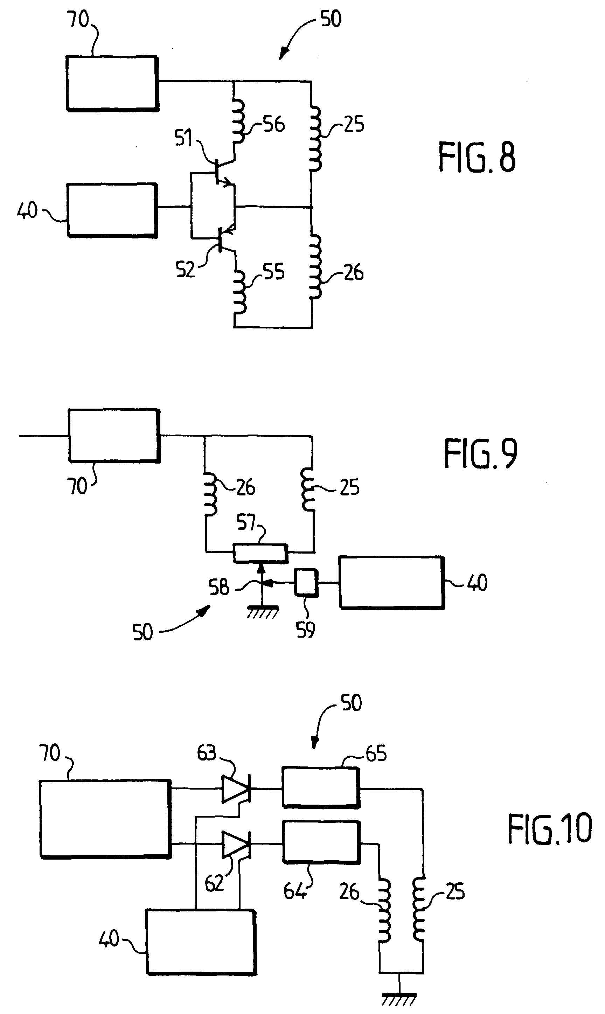

La figure 8 illustre un autre mode de réalisation de l'unité de commande 30. C'est essentiellement le module de pilotage 50 qui est modifié, par rapport au mode de réalisation de la figure 7.

Le module de pilotage 50 comporte toujours les transistors 51, 52 et également des inducteurs 55, 56. Les inducteurs 55, 56 sont branchés en parallèle avec les inducteurs 26, 25. Des inducteurs 25, 55 sont disposés sur le disque rotor 6, tandis que les inducteurs 26, 56 sont disposés sur le disque rotor 7.

Le module de régulation 40 commande les transistors 51, 52 de façon à dériver partiellement le courant des inducteurs 25, 26 dans les inducteurs 55, 56.

Pour illustrer le fonctionnement de l'unité de commande, on suppose que la valeur du flux mesurée par les moyens de mesure 19 est supérieure à celle mesurée par les moyens de mesure 20.

Le signal issu des moyens comparateurs 48 est alors positif comme celui délivré par le dispositif de régulation intégrale 49. Ce signal assure la conduction du transistor 51 et bloque le transistor 52.

Le courant issu de l'alimentation 70 croit alors dans l'inducteur 56, tandis que le courant dans l'inducteur 25 diminue. Comme chacune de ces bobines 25, 56 est située sur un disque rotor 6, 7 en regard des faces opposées du disque stator 1, le flux diminue du côté de l'inducteur 25, c'est-à-dire du disque rotor 6, et augmente du côté de l'inducteur 56, c'est-à-dire du disque rotor 7.

Pour les inducteurs 55 et 26, la commande des courants est inverse de celle qui a été décrite pour les inducteurs 25 et 56.

Le module de pilotage 55 permet donc de réaliser un équilibrage des flux de part et d'autre du disque stator, grâce au module de régulation 40.

La figure 9 représente un autre mode de réalisation du module de pilotage 50 des inducteurs 25 et 26.

Comme illustré sur la figure 3, chacun de ces inducteurs 25, 26 est placé en regard des faces opposées du disque stator 1. Ces inducteurs sont connectés en parallèle d'un côté, à l'alimentation de courant continu 70 et de l'autre, à chaque extrémité d'un rhéostat 57.

Le curseur 58 du rhéostat est connecté à la masse, comme illustré sur la figure 9 ou encore, à l'autre sortie de l'alimentation 70.

Le module de régulation 40 commande un servo-moteur 59, dont l'axe de sortie est lié mécaniquement au curseur 58 du rhéostat.

Le module de régulation 40 délivre un signal qui permet de faire varier le curseur du rhéostat. Le module 40 permet donc de faire varier, en sens inverse, la valeur des courants dans les inducteurs 25, 26. Ceci permet de faire varier les flux générés par ces inducteurs et donc d'équilibrer les forces exercées sur les faces opposées du stator.

La figure 10 représente un autre mode de réalisation du module de pilotage 50 des inducteurs 25 et 26, disposés comme illustré à la figure 3.

Le module de pilotage 50 comporte deux interrupteurs électroniques 62, 63, tels que des transistors ou des thyristors.

Le dispositif d'alimentation 70 délivre un courant alternatif à l'entrée de ces deux interrupteurs 62, 63 qui sont par ailleurs commandés par le module de régulation 40.

Le courant de commande délivré par les interrupteurs 62, 63 est filtré par les éléments 64, 65, par exemple des filtres passe-bas. Les éléments 64, 65 sont connectés en série avec les inducteurs 25, 26. Ils permettent d'atténuer l'ondulation et d'obtenir au niveau des disques rotor, un courant pseudo-continu, afin de limiter les pertes par courant de Foucault.

Les interrupteurs 62, 63, les éléments 64, 65 et les inducteurs 26, 25 sont connectés en parallèle. L'autre extrémité des inducteurs 25, 26 est reliée à la masse.

Dans tous les exemples illustrés en référence aux figures 7 à 10, les signaux délivrés par le module de régulation 40 permettent, au moyen du dispositif de pilotage 50, d'ajuster les courants alternatifs qui alimentent les inducteurs 25, 26, de façon à ce que les flux engendrés par les inducteurs annulent la force d'attraction résultante due à l'écart de valeur entre les deux entrefers de la machine.

La description qui précède a été faite pour une machine comportant un ensemble rotor/stator définissant deux entrefers. Cet ensemble peut être constitué d'un disque stator placé entre deux disques rotor ou d'un disque rotor placé entre deux disques stator. Si la machine comporte plusieurs ensembles rotor/stator, le procédé doit être appliqué pour chacun de ces ensembles et on peut donc prévoir autant de dispositifs de compensation des efforts d'attraction magnétique que d'ensembles rotor/stator. On peut également les regrouper en deux ou plusieurs sous-ensembles, susceptibles de s'adapter aux dispositifs de compensation tels que décrits précédemment.

Les signes de référence insérés après les caractéristiques techniques énoncées dans les revendications, ont pour seul but de faciliter la compréhension de ces dernières et ne peuvent avoir en aucun cas pour effet de limiter l'invention aux modes particulier de réalisation qui viennent d'être décrits.

**Revendications**

1.  Procédé de compensation des forces d'attraction magnétique à l'intérieur d'une machine électrique à structure discoïde comportant au moins trois disques rotor et stator (1, 6, 7) disposés coaxialement et formant deux entrefers (e1, e2), les disques extérieurs (6,7) étant d'un type différent de celui du disque intérieur (1), caractérisé en ce qu'il consiste à :

    -   mesurer pour chacun des deux entrefers (e1, e2), une même grandeur représentative de la valeur de l'entrefer,
    -   comparer lesdites grandeurs et
    -   modifier les flux des entrefers (e1, e2) pour équilibrer la valeur des deux entrefers, et ainsi, compenser lesdites forces d'attraction.

2.  Procédé de compensation selon la revendication 1, caractérisé en ce que les flux des entrefers sont modifiés en alimentant, de façon indépendante, les faces statoriques.

3. Procédé de compensation selon la revendication 2, caractérisé en ce que l'alimentation des faces statoriques est réalisée par l'intermédiaire de convertisseurs (85, 86), associés chacun à une face de disque stator (1).

4. Procédé de compensation selon la revendication 1, caractérisé en ce que les flux des entrefers sont modifiés en générant un flux additionnel au niveau de chaque entrefer (e1, e2).

5. Procédé de compensation selon la revendication 4, caractérisé en ce que le flux additionnel est généré par des courants circulant dans au moins un inducteur (25, 56 ; 26, 55).

6. Procédé de compensation selon l'une des revendications 1 à 5, caractérisé en ce que la grandeur représentative de la valeur de l'entrefer est une grandeur électromagnétique, notamment le flux polaire, le flux interpolaire ou l'induction.

7. Procédé de compensation selon l'une des revendications 1 à 5, caractérisé en ce que la grandeur représentative de la valeur de l'entrefer est une grandeur mécanique, notamment la déformation mécanique des disques ou le déplacement relatif entre un disque rotor et un disque stator.

8. Dispositif de compensation des forces d'attraction magnétique à l'intérieur d'une machine électrique à structure discoïde comportant au moins trois disques rotor et stator (1, 6, 7) disposés coaxialement et formant deux entrefers (e1, e2), les disques extérieurs (6,7) étant d'un type différent de celui du disque intérieur (1), caractérisé en ce qu'il comprend :

   - pour chaque entrefer (e1, e2), un moyen (19, 20) pour la mesure d'une grandeur représentative de la valeur dudit entrefer, disposé sur une face d'un des disques (1 ; 6, 7) formant ledit entrefer, ladite grandeur étant identique pour les deux moyens de mesure (19, 20), et
   - une unité de commande (30, 80) dont les entrées (21, 22 ; 81, 82) sont reliées auxdits moyens de mesure (19, 20) et dont les sorties (23, 24 ; 83, 84) sont reliées à des moyens d'équilibrage (25, 55 ; 26, 56 ; 85, 86), les signaux de sortie de l'unité de commande (30 ; 80) pilotant lesdits moyens d'équilibrage de façon à équilibrer les flux entre les deux entrefers (e1, e2) et ainsi compenser lesdites forces d'attraction.

9. Dispositif de compensation selon la revendication 8, caractérisé en ce que lesdits moyens d'équilibrage sont constitués par des convertisseurs (85, 86) associés chacun à une face de disque stator (1).

10. Dispositif de compensation selon la revendication 8, caractérisé en ce que lesdits moyens d'équilibrage sont constitués par au moins un inducteur (25, 55 ; 26, 56) pour chaque entrefer, disposé sur une face d'un des disques (1 ; 6, 7) formant ledit entrefer.

11. Dispositif de compensation selon la revendication 10, caractérisé en ce que certains inducteurs (25, 26) sont les bobinages (13, 14) du ou des disques rotor (6, 7).

12. Dispositif de compensation selon l'une des revendications 10 ou 11, caractérisé en ce que l'unité de commande (30) comprend :

   - un module de régulation (40), recevant en entrée les signaux issus des moyens de mesure (19, 20) et
   - un module de pilotage (50), connecté à un dispositif d'alimentation en courant (70) et auxdits inducteurs (25, 55 ; 26, 56), le module de régulation (40) délivrant un signal au module de pilotage (50) pour dériver le courant issu du dispositif d'alimentation (70) dans lesdits inducteurs.

13. Dispositif de compensation selon la revendication 12, caractérisé en ce que le module de régulation (40) comprend :

   - des moyens (45) pour transformer les signaux issus des moyens de mesure (19, 20) en des signaux continus,
   - des moyens comparateurs (48) desdits signaux continus, reliés à un dispositif de régulation intégrale (49).

14. Dispositif de compensation selon l'une des revendications 8 à 13, caractérisé en ce que chaque moyen de mesure (19, 20) est constitué par au moins une spire (20a, 20c ; 20b, 20d).

15. Dispositif de compensation selon l'une des revendications 8 à 13, caractérisé en ce que chaque moyen de mesure (19, 20) est constitué par au moins un capteur à effet Hall.

16. Dispositif de compensation selon l'une des revendications 8 à 13, caractérisé en ce que chaque moyen de mesure (19, 20) est constitué par au moins un capteur de déplacement à courant de Foucault.

**17.** Dispositif de compensation selon l'une des revendications 8 à 13, caractérisé en ce que chaque moyen de mesure (19, 20) est constitué par au moins une jauge de contrainte.

**18.** Dispositif de compensation selon l'une des revendications 13 à 17, caractérisé en ce qu'il comprend un système de sécurité (60) générant une alarme ou l'arrêt d'urgence de la machine lorsque la sortie des moyens comparateurs est supérieure à une valeur seuil déterminée.

**Claims**

**1.** Method of compensation for magnetic pull forces inside of an electric machine with a discoid structure comprising at least three rotor and stator discs (1, 6,7) arranged coaxially and forming two air-gaps (e1, e2), the external discs (6, 7) being of a type different from that of the internal disc (1), characterized in that it consists in :

- measuring for each one of both air-gaps (e1, e2) a same magnitude representative of the value of the air-gap,

- comparing the said magnitudes and

- Modifying the fluxes of the air-gaps (e1, e2) for balancing the value of both air-gaps and thus compensating for the said pull forces.

**2.** Method of compensation according to claim 1, characterized in that the fluxes of the air-gaps are modified by feeding in an independent manner the stator faces.

**3.** Method of compensation according to claim 2, characterized in that the feeding of the stator faces is carried out through the medium of converters (85.86) associated each one with one face of the stator disc (1).

**4.** Method of compensation according to claim 1, characterized in that the fluxes of the air-gaps are modified by generating an additional flux at the level of each air-gap (e1, e2).

**5.** Method of compensation according to claim 4, characterized in that the additional flux is generated by currents circulating within at least one inductor (25, 56 ; 26, 55).

**6.** Method of compensation according to one of claims 1 to 5, characterized in that the magnitude representative of the value of the air-gaps is an electromagnetic value, in particular the polar flux, the interpolar flux or the induction.

**7.** Method of compensation according to one of claims 1 to 5, characterized in that the magnitude representative of the value of the air-gap is a mechanical value, in particular the mechanical deformation of the discs or the relative displacement between a rotor disc and a stator disc.

**8.** Device for the compensation for magnetic pull forces inside of an electric machine with a discoid structure comprising at least three rotor and stator discs (1,6,7) arranged coaxially and forming two air-gaps (e1, e2), the external discs (6,7) being of a type different from that of the internal disc (1), characterized in that it comprises :

- for each air-gap (e1, e2), a means (19, 20) for the measurement of a magnitude representative of the value of the said air-gap, arranged on one face of one of the discs (1, 6, 7) forming the air-gap , the said magnitude being identical for both measurements means (19, 20), and

- a control unit (30, 80) of which the inputs (21, 22 ; 81,82) are connected to the said measurement means (19, 20) and of which the outputs (23, 24 ; 83,84) are connected to balancing means (25, 55 ; 26, 56, ; 85, 86), the output signals from the control unit (30 ; 80) operating the said balancing means so as to balance the fluxes between both air-gaps (e1, e2) and thus to compensate for the said pull forces.

**9.** Compensation device according to claim 8, characterized in that the said balancing means are constituted by converters (85, 86) associated each one with one face of a stator disc (1).

**10.** Compensation device according to claim 8, characterized in that the said balancing means are constituted by at least one inductor (25, 55 ; 26,56) for each air-gap, arranged onto one face of one of the discs (1 ;6,7) forming the said air-gap.

**11.** Compensation device according to claim 10, characterized in that some inductors (25, 26) are the coils (13, 14) of the rotor disc or discs (6,7).

**12.** Compensation device according to one of claims 10 or 11, characterized in that the control unit (30) comprises :

- a regulation module (40) receiving at the input signals from the measurements means (19, 20) and

- a control module (50) , connected to a current feeding device (70) and to the said inductors (25, 55 ; 26, 56), the regulation module (40) delivering a signal to the control module (50) for diverating the current from the feeding device (70) into the said inductors.

13. Compensation device according to claim 12, characterized in that the regulation module (40) comprises :

   - means (45) for transforming the signals from the measurement means (19, 20) into continuous signals,

   - means (48) for comparing the said continuous signals, connected to an integral regulation device (49).

14. Compensation device according to one of claims 8 to 13, characterized in that each measurement means (19, 20) is constituted by at least one winding turn (20a, 20c, 20b, 20d).

15. Compensation device according to one of claims 8 to 13, characterized in that each measurement means (19, 20) is constituted by at least one Hall effect sensor.

16. Compensation device according to one of claims 8 to 13, characterized in that each measurement means (19, 20) is constituted by at least one displacement sensor with eddy currents.

17. Compensation device according to one of claims 8 to 13, characterized in that each measurement means (19, 20) is constituted by at least one strain gauge.

18. Compensation device according to one of claims 13 to 17, characterized in that it comprises a safety system ( 60) generating an alarm or an emergency stop of the machine when the output of the comparator means is higher than a determined threshold value.

**Patentansprüche**

1. Verfahren zum Ausgleich der magnetischen Anziehungskräfte innerhalb einer elektrischen Maschine mit scheibenförmigem Aufbau, die wenigstens drei koaxial angeordnete und zwei Luftspalte (e1, e2) bildende Rotor-und Statorscheiben (1, 6, 7) aufweist, wobei die Aussenscheiben (6,7) einer anderen Bauart als derjenigen der Innenscheibe (1) sind, dadurch gekennzeichnet, daß es darin besteht :

   - für jeden der beiden Luftspalte (el, e2) eine selbe den Wert des Luftspaltes darstellende Größe zum messen,

   - die besagten Größen zu vergleichen und

   - die Flüsse der Luftspalte (e1, e2) zu verändern, um den Wert der beiden Luftspalte anzugleichen und somit die besagten Anziehungskrafte auszugleichen.

2. Ausgleichungsverfahren gemäß Anspruch 1, dadurch gekennzeichnet, daß die Flüße der Luftspalte verändert werden, in dem man die Statorflächen in unabhängiger Weise speist.

3. Ausgleichungsverfahren gemäß Anspruch 2, dadurch gekennzeichnet, daß die Speisung der Statorflächen über jeweils eine Fläche der Statorscheibe (1) zugeordnete Wandler (85, 86) durchgeführt wird.

4. Ausgleichungsverfahren gemäß Anspruch 1, dadurch gekennzeichnet, daß die Flüße der Luftspalte verändert werden, indem man einen zusätzlichen Fluß im Bereich jedes Luftspaltes (e1, e2) erzeugt.

5. Ausgleichungsverfahren gemäß Anspruch 4, dadurch gekennzeichnet, daß der zusätzliche Fluß durch in wenigstens einem Induktor (25, 56; 26, 55) fließende Ströme erzeugt wird.

6. Ausgleichungsverfahren gemäß einem der Ansprüche 1 bis 5, dadurch gekennzeichnet daß die den Wert des Luftspaltes darstellende Größe eine elektromagnetische Größe, insbesondere der Polfluß, der Zwischenpolfluß oder die Induktion ist.

7. Ausgleichungsverfahren gemäß einem der Ansprüche 1 bis 5, dadurch gekennzeichnet, daß die den Wert des Luftspaltes darstellende Größe einer mechanische Größe, insbesondere die mechanische Verformung der Scheiben oder die relative Verschiebung zwischen der Rotorscheibe und der Statorscheibe ist.

8. Vorrichtung zur Ausgleichung der magnetischen Anziehungskräfte innerhalb einer elektrischen Maschine mit scheibenförmigem Aufbau, die wenigstens drei koaxial angeordnete und zwei Luftspalte (e1, e2) bildende Rotor-und Statorscheiben (1, 6, 7) aufweist, wobei die Aussenscheiben (6,7) einer anderen Bauart als derjenigen der Innenscheibe (1) sind, dadurch gekennzeichnet, daß sie umfaßt :

   - für jeden Luftspalt (e1, e2), ein an einer Fläche der den besagten Luftspalt bildenden Scheiben (1; 6, 7) angeordnetes Mittel (19, 20) zur Messung einer dem Wert des besagten Luftspaltes darstellenden Größe, wobei die besagte Größe dieselbe für die beiden Messmittel (19,20) ist, und

- eine Steuereinheit (30, 80), deren Eingänge (21, 22 ; 81, 82) mit den besagten Messmitteln (19, 20) verbunden sind und deren Ausgänge (23, 14 ; 83, 84) mit Angleichungsmitteln (25, 55 ; 26, 56 ; 85, 86) verbunden sind, wobei die Ausgangssignale der Steuereinheit (30 ; 80) die besagten Angleichungsmittel derart steuern, daß sie die Flüße zwischen den Luftspalten (e1, e2) angleichen und somit die besagten Anziehungskräfte ausgleichen.

9. Ausgleichungsvorrichtung gemäß Anspruch 8, dadurch gekennzeichnet, daß die besagten Angleichungsmittel durch jeweils einer Fläche der Statorscheibe (1) zugeordnete Wandler (85, 86) gebildet sind.

10. Ausgleichungsvorrichtung gemäß Anspruch 8, dadurch gekennzeichnet, daß die besagten Angleichungsmittel durch wenigstens einen an einer Fläche der einen den besagten Luftspalt bildenden Scheibe (1; 6, 7) angeordneten Induktor (25, 55 ; 26, 56) für jeden Luftspalt gebildet werden.

11. Ausgleichungsvorrichtung gemäß Anspruch 10, dadurch gekennzeichnet, daß gewisse Induktore (25, 26) Wicklungen (13, 14) der Rotorscheibe(n) (6,7) sind.

12. Ausgleichungsvorrichtung gemäß einem der Ansprüche 10 oder 11, dadurch gekennzeichnet, daß die Steuereinheit (30) umfaßt :

- einen am Eingang die von den Messmitteln (19, 20) ausgesandten Signale empfangenden Regelungsmodul (40) und

- einen mit einer Stromspeisevorrichtung (70) und mit den besagten Induktoren (25, 55 ; 26, 56) verbundenen Steuermodul (50), wobei der Regelungsmodul (40) ein Signal an den Steurungsmodul (50) abgibt, um den von der Speisevorrichtung (70) herkommenden Strom in die besagten Induktore umzuleiten.

13. Ausgleichungsvorrichtung gemäß Anspruch 12, dadurch gekennzeichnet, daß der Regelungsmodul (40) :

- Mittel (45), um die von den Messmitteln (19, 20) herkommenden Signale in kontinuierliche Signale umzuwandeln,

- mit einer Vorrichtung (49) zur integralen Regelung verbundene Mittel (48) zum Vergleich der besagten kontinuierlichen Signale umfaßt.

14. Ausgleichungsvorrichtung gemäß einem der Ansprüche 8 bis 13, dadurch gekennzeichnet, daß jedes Messmittel (19, 20) durch wenigstens eine Windung (20a, 20c ; 20b, 20d) gebildet wird.

15. Ausgleichungsvorrichtung gemäß einem der Ansprüche 8 bis 13, dadurch gekennzeichnet, daß jedes Messmittel (19, 20) durch wenigstens einen Halleffektmesswertgeber gebildet wird.

16. Ausgleichungsvorrichtung gemäß einem der Ansprüche 8 bis 13, dadurch gekennzeichnet, daß jedes Messmittel (19, 20) durch wenigstens einen Wirbelstromverschiebungsgeber gebildet wird.

17. Ausgleichungsvorrichtung gemäß einem der Ansprüche 8 bis 13, dadurch gekennzeichnet, daß jedes Messmittel (19, 20) durch wenigstens ein Dehnungsmessgerät gebildet wird.

18. Ausgleichungsvorrichtung gemäß einem der Ansprüche 13 bis 17, dadurch gekennzeichnet, daß sie ein Sicherheitssystem (60) umfaßt, daß einen Alarm oder eine Notauschaltung der Maschine erzeugt, wenn der Ausgangswert der Vergleichsmittel größer als ein bestimmter Schwellenwert ist.

FIG.1

FIG. 2

FIG.4

FIG. 3

FIG. 5

FIG. 6

FIG.7

FIG.8

FIG.9

FIG.10